Europäisches Patentamt

European Patent Office

Office européen des brevets

(19)

(11) Veröffentlichungsnummer : **0 114 980**
**B1**

(12) **EUROPÄISCHE PATENTSCHRIFT**

(45) Veröffentlichungstag der Patentschrift :
01.10.86

(51) Int. Cl.⁴ : **F 24 H 1/44, F 28 F 21/04**

(21) Anmeldenummer : 83112089.4

(22) Anmeldetag : 01.12.83

(54) **Zentralheizungskessel.**

(30) Priorität : 26.01.83 DE 3302477
31.08.83 DE 3331340

(43) Veröffentlichungstag der Anmeldung :
08.08.84 Patentblatt 84/32

(45) Bekanntmachung des Hinweises auf die Patenterteilung : 01.10.86 Patentblatt 86/40

(84) Benannte Vertragsstaaten :
AT BE CH DE FR GB LI LU NL

(56) Entgegenhaltungen :
EP-A- 0 037 998
DE-A- 1 579 837
DE-A- 1 951 701
DE-A- 2 837 004
DE-A- 3 042 552
NL-A- 7 116 971

(73) Patentinhaber : Buderus Aktiengesellschaft
Sophienstrasse 32-34
D-6330 Wetzlar (DE)

(72) Erfinder : Noack, Rolf, Dr. Ing.
Altvaterstrasse 20
D-6330 Wetzlar-Steindorf (DE)
Erfinder : Bechtum, Lothar, Dipl.-Ing.
Chr. Rübsamenstrasse 55
D-6330 Wetzlar (DE)
Erfinder : Deckert, Lothar, Dipl.-Ing.
Händelstrasse 5
D-6301 Staufenberg 1 (DE)
Erfinder : Faust, Hans Joachim, Dipl.-Ing.
Wilhelm-Liebknecht-Strasse 30
D-6300 Giessen (DE)
Erfinder : Jung, Anton Ladislaus, Dipl.-Ing.
Bachstrasse 13
D-6348 Herborn (DE)
Erfinder : Stiller, Norbert, Dr. rer. nat.
Auf dem Rücken 5
D-6330 Wetzlar-Nauborn (DE)
Erfinder : Dworak, Ulf, Dr., Dipl.-Min.
Pfarrstrasse 50
D-7066 Baltmannweiler 2 (DE)
Erfinder : Olapinski, Hans, Dr., Dipl.-Chem.
Talstrasse 12
D-7307 Aichwald 1 (DE)

(74) Vertreter : Benner, Alwin, Dipl.-Ing.
Buderus Aktiengesellschaft ZA-Patentabteilung Postfach 1220
D-6330 Wetzlar (DE)

**Beschreibung**

Die Erfindung betrifft einen Zentralheizungskessel nach dem Oberbegriff des Patentanspruches 1.

Einen Heizungskessel mit abwärts geführtem
Heizgaszug zeigt die DE-A-28 37 004. Gemäß der
EP-A-37 998 sind im Heizgaszug eines solchen
Heizungskessels Keramikeinzelelemente zur Ausbildung von vertikalen Heizgasschächten angeordnet. Die Heizgase werden im Heizgaszug abwärts geführt und bis unter den Taupunkt abgekühlt. Es scheidet sich Kondensat aus, welches in
einem Sammelraum unterhalb des Heizgaszuges
aufgefangen und von dort abgeführt wird. Die
abgekühlten, trockenen Heizgase strömen zum
Schornstein weiter.

Ein solcher Heizungskessel, auch Brennwertkessel genannt, hat den Vorteil einer äußerst
hohen Energieausbeute. Während bei herkömmlichen Heizungskesseln Heizgastemperaturen um
180 °C am Kesselausgang nicht unterschritten
werden sollten, um eine Versottung des Schornsteins zu vermeiden, können die Temperaturen
im Heizungskessel jetzt auf Werte um 40 °C
abgesenkt werden. Die durch die Temperaturabsenkung frei werdende Wärme und die
ebenfalls frei werdende Kondensationswärme
können zusätzlich vom Heizwasser übernommen
werden. Der Wirkungsgrad steigt beträchtlich.

Ein Problem bei den Heizungskesseln der genannten Art entsteht durch die starke Korrosionswirkung des ausgeschiedenen Kondensats.
Insbesondere der Heizgaszug ist den Angriffen
des sauren Kondensats beständig ausgesetzt. Um
Zerstörungen des Heizungskessels zu vermeiden,
sind bei dem Heizungskessel nach der genannten
EP-A-37 998 die gefährdeten Wärmeaustauschflächen aus Keramik hergestellt. Dabei liegen
Keramikplatten nebeneinander.

Die nebeneinander angeordneten Keramikplatten stellen wohl eine korrosionsfeste Wärmeaustauschfläche dar. Ihre Anzahl und damit die
Größe der Wärmeaustauschfläche ist jedoch an
den Querschnitt des Heizgaszuges gebunden. Es
ist nicht möglich, den Heizgaszug den jeweils
vorliegenden Bedürfnissen anzupassen, um auf
jeden Fall die gewünschte Absenkung der
Heizgastemperatur zu erzielen.

Es soll ein Heizungskessel geschaffen werden,
dessen Wärmeaustauschfläche im Heizgaszug
den jeweils vorliegenden Umständen und Bedürfnissen angepaßt werden kann.

Der erfindungsgemäße Heizungskessel besitzt
die im Kennzeichen des Patentanspruchs 1 genannten Merkmale.

Durch die Anordnung der Keramikplatten quer
zur Heizgasströmung ist es möglich, beliebig
viele Elemente hintereinander anzuordnen. Eine
solche Gliederbauweise erlaubt es, den
Heizgaszug so lang zu gestalten, wie es für die
Absenkung der Heizgastemperatur im Einzelfall
erforderlich ist. Der NL-A-71 16 971 ist eine Gliederbauweise von Wärmeaustauschern an sich zu
entnehmen, jedoch nicht für einen Heizungskessel nach dem Oberbegriff des Patentanspruches 1.

Dort liegt auch nicht die spezielle Heizwasserströmung vor. Diese läuft nach der Erfindung im
Kreuz-Gegenstrom zur Heizgasströmung und unterstützt die Wirksamkeit des Heizgaszuges.

Die Heizwasserkanäle können aus quer verlaufenden, in Sammelkanäle einmündenden
Bohrungen bestehen. Diese sind von einer Seite
her einzubringen und an der Öffnungsseite
wasserdicht zu verschließen.

Durch äußere Krümmer sind die Sammelkanäle
benachbarter Keramikplatten wechselseitig zu
verbinden. Es entsteht eine gerichtete
Heizwasserströmung durch alle Heizwasserkanäle vom Heizungsrücklauf zum Kesselwasserraum.
Die Krümmer werden dabei durch Zuganker mit
den Keramikplatten verspannt. Durch Zuganker
sind auch die Brennkammer, der Heizgaszug und
der Abgassammler zu verbinden.

Nähere Einzelheiten der Erfindung sind der
beigefügten Zeichnung zu entnehmen, die ein
Ausführungsbeispiel der Erfindung zeigt.

Es zeigt :

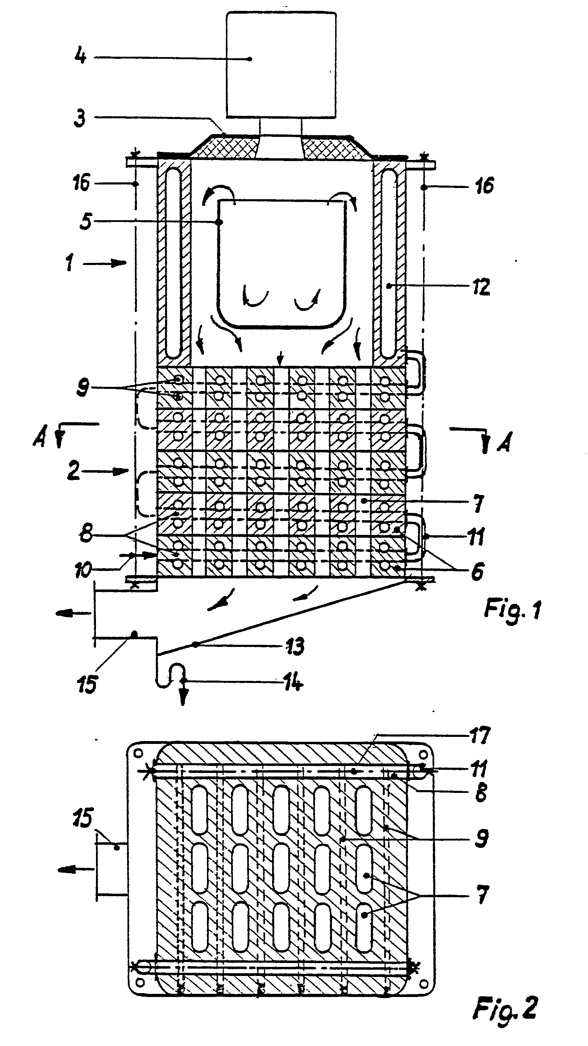

Figur 1   einen Längsschnitt durch einen Heizungskessel und

Figur 2   den Schnitt A-A aus Fig. 1.

Der Heizungskessel besteht aus einer Brennkammer 1 und einem Heizgaszug 2. Oberhalb der
Brennkammer 1 sitzt auf einer isolierten
Brennertür 3 ein Sturzbrenner 4. Ein Umlenkschirm 5 aus schlecht wärmeleitendem Material
sorgt für eine Umlenkung der Brennerflamme
und eine Abschirmung des Heizgaszuges gegen
eine direkte Heizgasstrahlung.

Die Brennkammer 1 besteht vorzugsweise aus
Gußeisen. Sie kann auch in Stahl ausgeführt sein.
Es ist davon auszugehen, daß die Brennkammerwände infolge der hohen Heizflächenbelastung trocken bleiben. Trotzdem ist ein Korrosionsschutz durch Beschichtung, etwa durch ein
Spezialemail, zweckmäßig.

Der Heizgaszug 2 besteht aus einzelnen Keramikplatten 6 mit abwärts geführten Heizgasschächten 7. Die Heizgase geben hier weitere
Wärme ab. Diese wird durch die Keramikmasse
an das Heizungswasser weitergeleitet.

Das Heizungswasser strömt durch
Heizwasserkanäle aus quer verlaufenden, in
Sammelkanäle 8 mündenden Bohrungen 9. Die
Bohrungen 9 sind von einer Seite her eingebracht
und durch keramische Stopfen verschlossen.

Das Heizwasser tritt durch den Heizungsrücklauf 10 in einen Sammelkanal 8 der unteren
Keramikplatte 6 ein und strömt durch die
Bohrungen 9 zum anderen Sammelkanal
derselben Keramikplatte. Von dort gelangt es
durch einen Krümmer 11 zum Sammelkanal der
nächsten Keramikplatte. Nach dem Durchströmen aller Keramikplatten wird es dem
Kesselwasserraum 12 zugeführt. Die Krümmer 11
werden durch Zuganker 17 gegen die Stirnseiten
der Keramikplatten 6 gezogen und in bekannter

Weise durch einen O-Ring abgedichtet. Sie können starr oder elastisch ausgebildet sein.

Die Gegenströmung von Heizgasen und Heizwasser führt zu der gewünschten Abkühlung der Heizgase. Abgeschiedenes Kondensat strömt in eine Sammelkammer 13 aus korrosionsbeständigem Material. Von der Sammelkammer 13 gelangt es durch einen Syphon 14 zum Ablauf. Die ausgekühlten Heizgase werden durch einen Abgasstutzen 15 abgeleitet.

Zuanker 16 verbinden die Brennkammer 1, den Heizgaszug 2 und die Sammelkammer 13 miteinander. Eine heizgasseitige Abdichtung der Keramikplatten 6 untereinander und mit der Brennkammer 1 erfolgt durch einen geeigneten Kitt, wie er bei der Abdichtung von Gliederheizkesseln bekannt ist. Eine Nut- und Federabdichtung ist möglich.

**Patentansprüche**

1. Zentralheizungskessel mit einer Brennkammer (1) und einem abwärts zu einem Sammler (13) geführten Heizgaszug (2) aus zusammenzufügenden Keramikeinzelelementen (6, 6') mit vertikalen Heizgasschächten (7) zum Abkühlen der Heizgase bis unter den Taupunkt, dadurch gekennzeichnet, daß der Heizgaszug (2) aus quer zur Strömungsrichtung der Heizgase angeordneten, mit Heizgasschächten (7) und Heizwasserkanälen (8, 9) versehenen Keramikplatten (6) besteht, wobei eine Heizwasserströmung von der untersten, an den Heizungsrücklauf (10) angeschlossenen zur obersten, an den Kesselwasserraum (12) angeschlossenen Keramikplatte erfolgt.

2. Zentralheizungskessel nach Anspruch 1, dadurch gekennzeichnet, daß die Heizwasserkanäle (8, 9) aus quer verlaufenden, in Sammelkanäle (8) einmündenden Bohrungen (9) bestehen.

3. Zentralheizungskessel nach den Ansprüchen 1 und 2 dadurch gekennzeichnet, daß die Sammelkanäle (8) benachbarter Keramikplatten (6) wechselseitig durch außen aufgesetzte Krümmer (11) miteinander verbunden sind.

4. Zentralheizungskessel nach den Ansprüchen 1 bis 3, dadurch gekennzeichnet, daß die Krümmer (11) durch Zuganker (17), welche die Sammelkanäle (8) durchdringen, mit den Keramikplatten (6) verspannt sind.

5. Zentralheizungskessel nach Anspruch 1, dadurch gekennzeichnet, daß die Brennkammer (1), der Heizgaszug (2) und der Sammler (13) durch Zuganker (16) miteinander verbunden sind.

**Claims**

1. Central heating boiler with a combustion chamber (1) and a hot gas channel (2) in single ceramic elements joined together (6, 6') with vertical hot gas shafts (7) for cooling the hot gases to below the dew point, leading down to a collector (13) characterized in that the hot gas channel (2) consists of ceramic plates (6) arranged transverse to the direction of flow of the hot gases, and fitted with hot gas shafts (7) and hot water channels (8, 9), whereby a flow of hot water occurs from the lowest, connected to the heating return (10) to the highest ceramic plate, connected to the boiler water space (12).

2. Central heating boiler according to claim 1, characterized in that the hot water channels (8, 9) consist of transverse boreholes (9) joining into collecting channels (8).

3. Central heating boiler according to claims 1 and 2, characterized in that the ceramic plates (6) alongside the collecting channels (8) are connected to each other on alternate sides by elbows (11) fitted from outside.

4. Central heating boiler according to claims 1 to 3, characterized in that the elbows (11) ate braced on the ceramic plates (6) by tension anchors (17) which pass through the collecting channels (8).

5. Central heating boiler according to claim 1, characterized in that the combustion chamber (1), the hot gas channel (2) and the collector (13) are connected to each other by tension anchors (16).

**Revendications**

1. Chaudière de chauffage central avec une chambre de combustion (1) et un tirage de gaz de chauffage (2) mené vers le bas vers un collecteur (13) et consistant en des éléments particuliers (6, 6') reliés ensemble avec des puits verticaux (7) à gaz de chauffage pour le refroidissement des gaz de chauffage jusqu'à en dessous du point de rosée, caractérisée par le fait que le tirage à gaz de chauffage (2) consiste en des plaques en céramique (6) munies de puits (7) pour les gaz de chauffage et des canaux pour l'eau de chauffage (8, 9) et disposées transversalement à la direction d'écoulement des gaz de chauffage, un courant d'eau chaude se produisant de la plaque céramique inférieure branchée sur le retour du chauffage (10) vers la plaque supérieure branchée sur le compartiment d'eau (12) de la chaudière.

2. Chaudière de chauffage central selon la revendication 1, caractérisée par le fait que les canaux d'eau chaude (8, 9) consistent en alésages (9) transversaux affluant dans des canaux collecteurs (8).

3. Chaudière de chauffage central selon les revendications 1 et 2 caractérisée par le fait que les canaux collecteurs (8) de plaques céramiques voisines (6) sont reliés réciproquement par des coudes (11) montés à l'extérieur.

4. Chaudière de chauffage central selon les revendications 1 à 3, caractérisée par le fait que les coudes (11) sont reliés avec les plaques céramiques (6) par des haubans (17) traversant les canaux collecteurs (8).

5. Chaudière de chauffage central selon la revendication 1, caractérisée par le fait que la chambre de combustion (1), le tirage du gaz de chauffage (2) et le collecteur sont reliés par des haubans (16).

Fig. 1

Fig. 2